# EUROPÄISCHE PATENTSCHRIFT

(11) **EP 1 748 906 B1**
(45) Veröffentlichungstag und Bekanntmachung des Hinweises auf die Patenterteilung: **28.09.2011**
(21) Anmeldenummer: 05749108.6
(22) Anmeldetag: 24.05.2005
(51) Int. Cl.: B60C 23/04

(54) **VERFAHREN UND VORRICHTUNG ZUR STEUERUNG DES BETRIEBES EINER EINEM FAHRZEUGRAD ZUGEORDNETEN RADELEKTRONIK**
METHOD AND DEVICE FOR CONTROLLING THE OPERATION OF AN ELECTRONIC DEVICE THAT IS ALLOCATED TO A VEHICLE WHEEL
PROCEDE ET DISPOSITIF DE COMMANDE DU FONCTIONNEMENT D'UN DISPOSITIF ELECTRONIQUE D'UNE ROUE D'UN VEHICULE

(30) Priorität: 27.05.2004 DE 102004026035
(43) Veröffentlichungstag der Anmeldung: 07.02.2007
(73) Patentinhaber: Continental Automotive GmbH, 30165 Hannover (DE)
(72) Erfinder: KUCHLER, Gregor, 93107 Thalmassing (DE)
(86) Internationale Anmeldenummer: PCT/EP2005/052364
(87) Internationale Veröffentlichungsnummer: WO 2005/115771

(56) Entgegenhaltungen:
- WO-A-2004/030948
- US-A- 5 889 464
- US-A1- 2002 044 050
- US-B1- 6 580 364

## Beschreibung

Die vorliegende Erfindung betrifft ein Verfahren und eine Vorrichtung zur Steuerung des Betriebes einer einem Rad eines Fahrzeugs zugeordneten Radelektronik, insbesondere zur optimalen bzw. fahrzustandsangepassten Ausnutzung des vorhandenen Energiereservoirs.

Obwohl auf beliebige ein oder mehrere Reifen aufweisende Fahrzeuge anwendbar, werden die vorliegende Erfindung sowie die ihr zugrunde liegende Problematik in Bezug auf ein Personenkraftfahrzeug näher erläutert.

Aktive und passive Sicherheitssysteme im Kraftfahrzeugbereich spielen eine immer größer werdende Rolle bei der Fortentwicklung von Fahrzeugen. Die Erwartungen der Kunden erfordern sowohl Leistungsfähigkeit und Komfort, gerichtet auf eine zunehmende Sicherheit für die Fahrzeuginsassen.

Neben den passiven und aktiven Sicherheitssystemen, wie Airbag, Aufprallschutz und Gurtstraffer, gewinnt mehr und mehr die aktive Fahrsicherheit mit ihren immer größer werdenden Möglichkeiten an Bedeutung. Ziel der Entwicklung ist dabei ein Kontrollsystem, das die momentane Fahrsituation schnell erfasst und sofort in eine etwaige kritische Lage aktiv eingreifen bzw. dem Fahrer ein entsprechendes Signal für eine manuelle Änderung der Fahrsituation liefern kann.

Beispielsweise kann der Reifendruck überwacht werden, wobei bei kritischen Werten des Reifendrucks das Kontrollsystem dem Fahrer diesen Mangel anzeigen kann, welcher daraufhin die Möglichkeit hat, entsprechend zu reagieren. Bei Systemen zur Reifendrucküberwachung ist es notwendig, Sensoren im Reifeninneren zu integrieren, welche beispielsweise den Druck, die Temperatur, Beschleunigungen und eventuell weitere Messgrößen erfassen und an beispielsweise die fahrzeugfeste zentrale Auswerteeinheit übermitteln.

Für den sicheren und auch ökonomischen Betrieb eines Kraftfahrzeugs ist die Kenntnis bestimmter Kenngrößen der Reifen von grundlegender Bedeutung. Insbesondere stellt ein platter oder mit zu wenig Betriebsdruck beaufschlagter Radreifen bei den Anforderungen an heutige Kraftfahrzeuge ein beachtliches Sicherheitsrisiko dar. Dabei ermöglichen es gerade die an und für sich positiven Notlaufeigenschaften moderner Fahrzeugreifen einem Kraftfahrzeugführer nicht mehr ohne weiteres, einen Reifendefekt der vorstehend genannten Art unmittelbar zu erkennen. So ist eine stabile Fahrt mit einem platten Radreifen ohne wesentliche Komforteinbußen mit bis zu 80 km/h möglich, ohne dass der Kraftfahrzeugführer akustisch oder durch wesentlich geändertes Fahrverhalten auf diesen Fehlerzustand aufmerksam werden könnte. Bei einer höheren Geschwindigkeit verhält sich ein derartiger Radreifen dann schlagartig unkontrollierbar.

Damit kann sich ein Fahrzeug mit einem platten Radreifen bei einer Fahrt durch eine Ortschaft zuverlässig verhalten. Direkt nach der Auffahrt auf eine Autobahn gerät das Fahrzeug dann jedoch bei höherer Geschwindigkeit außer Kontrolle des Fahrers, ohne dass ein Warnhinweis abgegeben worden wäre.

Weitere Störungen können auch durch Unwuchten, fehlerhafte Einstellung von Sturz und Spur an einem Rad oder aber durch Defekte einer internen Radreifenstruktur auftreten. Auch diese Defekte können schnell schwerwiegende Schäden an dem Radreifen hervorrufen, insbesondere sind sie geeignet, das Fahrzeug in einer Gefahrensituation außer Kontrolle geraten zu lassen, beispielsweise bei einer Vollbremsung auf einer Autobahn bei hoher Geschwindigkeit.

Gemäß dem Stand der Technik sind radmontierte Elektroniken, welche sowohl auf der Felge als auch am Reifen montiert sein können, z.B. zur Überwachung des Reifendrucks mittels Sensoreinrichtungen, der Fahrbahnbeschaffenheit oder der Radbeladung in dem Reifen vorgesehen. Die radmontierten Elektroniken benötigen elektrische Energie zur Ausübung ihrer Funktionen.

Alle Bauteile können dabei in ein Reifeninformationssystem als Teil eines umfassenderen Fahrerassistenzsystems einmünden. Es wird dabei die Entwicklung von zwei grundsätzlich verschiedenen Ansätzen von Reifeninformationssystemen verfolgt: batteriegestützte und batterielose Systeme. Aufgrund der extremen Einsatzbedingungen eines Radreifens hat sich eine Signalübertragung per Funk bzw. elektromagnetischer Welle gegenüber elektromechanischen Übertragungswegen generell durchgesetzt.

Batteriegestützte Systeme haben den Vorteil, dass die Energieversorgung sowohl für die Messungen der Reifenparameter, wie z.B. Druck, als auch für eine anschließende Funkübertragung der Informationen zum Fahrzeug durch eine Batterie erfolgt. Eine hierzu benötigte Fahrzeug-Architektur weist einen geringen zusätzlichen Umfang auf: Es genügen vier Reifenelektroniken und ein zentraler Funkempfänger mit einer anschließenden Signalverarbeitung.

Die Nachteile batteriegestützter Reifeninformationssysteme sind jedoch gravierend: Eine im Innern eines Radreifens vorgesehene Batterie bildet zusätzlich eine Unwucht, die mit entsprechendem Aufwand ausgeglichen werden muss. Zudem weisen Radreifen insbesondere bei Lastkraftwagen sehr hohe Standzeiten auf, d.h. diese Reifen sind extrem langlebig und dementsprechend lang im Einsatz. So muss eine Batterie eine extreme Lebensdauer haben, um die gewünschte Funktionalität über die gesamte Laufzeit sicherstellen zu können. Neben der hohen Lebensdauer muss eine solche Batterie zudem in einem weiten Temperaturbereich zuverlässig einsetzbar sein. Eine Ausgangsspannung herkömmlicher Batterien würde zwischen den Werten bei winterlichem Einsatz und denen eines Langzeiteinsatzes bei hochsommerlichen Außentemperaturen ganz erheblich schwanken. Diese und weitere Anforderung führen derzeit zu teuren und entsprechend voluminösen Ausführungsformen.

Es sind daher in der Vergangenheit bereits verschiedene batterielose Systeme vorgeschlagen worden, die auf den folgenden Funktionsprinzipien beruhen:
a) Die Reifenelektronik wird durch ein elektromagnetisches Feld mit Energie versorgt, die sowohl zur Messung der Reifenparameter, als auch zur Informationsübertragung genutzt wird. In der Regel erfordert dieser Ansatz vier dezentral angeordnete Antennen, die im Bereich der Radkästen montiert sind, um eine ausreichende Feldstärke zur Verfügung zu stellen. Im Vergleich zu den vorstehend beschriebenen batteriegestützten Systemen bedeutet dies einen erheblichen Zusatzaufwand in und an einem jeweiligen Fahrzeug.
b) Kinetische Energie, die bei der Bewegung der Reifenelektronik im Reifen zur Verfügung steht, wird zum Beispiel mit Hilfe eines Piezogenerators oder mit Hilfe eines mechanischen Generators zur Versorgung der Elektronik genutzt, ähnlich z.B. einer sogenannten Automatikuhr.

Im allgemeinen haben batterielose Systeme gegenüber batteriegestützten Systemen den Vorteil einer quasi unbegrenzten Lebenszeit und einer systembedingten Wartungsfreiheit. Sie werden daher als Ausgangspunkt einer erfindungsgemäßen Weiterbildung gewählt.

Der Vorteil eines Ansatzes nach b) liegt ferner darin, dass beim Fahrbetrieb stets genügend viel Energie und damit Sendeleistung zur Verfügung gestellt wird, um die Reifeninformationen zu einem zentralen Empfänger zu senden. Damit reicht ein zentraler Funkempfänger in einem Fahrzeug aus, wie dies auch bei den batteriegestützten Systemen der Fall ist.

Im Stand der Technik findet sich speziell der Ansatz eines batterielosen Konzeptes, wobei die notwendige elektrische Energie berührungslos übertragen oder mittels eines Wandelungselementes für eine Umwandlung von mechanischer Energie in elektrische Energie generiert. Diese Energie wird batterielos u.a. aus der Wandelung mechanischer Verformungsenergie des Reifens aus der Walkarbeit, den Vibrationen, den Reifenschwingungen, oder dergleichen in elektrische Energie zur Verfügung gestellt werden. Als Wandelungselemente werden beispielsweise piezoelektrische Elemente verwendet, welche entweder außerhalb des Reifens oder flächig in den Reifen integriert sind.

Im Stand der Technik werden allgemein, wie oben bereits erläutert, Generatoren und Zwischenenergiespeicher direkt mit dem Endverbraucher, d.h. im vorliegenden Fall der elektronischen Radeinheit, verbunden. An diesem Ansatz hat sich jedoch die Tatsache als nachteilig herausgestellt, dass die Einsatzbereitschaft der elektronischen Radeinheit vom Energieangebot des Generators bzw. den Eigenschaften des zwischengeschalteten Energiespeichers abhängt. Eine Betriebsbereitschaft in bestimmten Situationen wird nicht gezielt angestrebt. Allerdings erfordern bei beispielsweise Reifendruckkontrollsystemen bestimmte Fahrzustände eine erhöhte Betriebsbereitschaft der elektronischen Radeinheit. Beispiele hierfür sind Initialisierungs- und Lokalisierungsphasen des jeweiligen Rads während des Beginns des Fahrbetriebes. Gemäß dem Stand der Technik fehlt den generatorversorgten Radeinheiten während des Beginns des Fahrbetriebes aufgrund der vorherrschenden geringen Geschwindigkeiten und dem damit einhergehenden geringen Energieangebot zumeist die nötige Energie, um vorzugsweise mit einer erhöhten Häufigkeit, beispielsweise Signale in einem Abstand von 15 Sekunden anstatt in einem Abstand von 60 Sekunden, ein Funktelegramm zu senden.

Ein weiteres Beispiel für eine erhöhte Betriebsbereitschaft der elektronischen Radeinheit stellen Fahrzustände bei hohen Geschwindigkeiten des Fahrzeugs dar, bei welchen das erhöhte Sicherheitsrisiko eine erhöhte Sendefrequenz erfordert. Somit liegt ein Nachteil dieses Ansatzes gemäß dem Stand der Technik darin, dass bei bestimmten Fahrzuständen des Fahrzeugs eine eingeschränkte Verfügbarkeit des energieliefernden Generators bzw. des Zwischenspeichers auftreten kann und eine sichere Funktionsweise der elektronischen Radeinheit nicht gewährleistet ist. Demnach müssten zur Gewährleistung eines sicheren Betriebes der elektronischen Radeinheit in bestimmten Fahrzuständen eine zusätzliche Hilfsbatterie vorgesehen werden, was zusätzliche Kosten zur Folge hat.

WO2004/030948 A1 zeigt eine Vorrichtung zur Steuerung des Betriebes einer einem Fahrzeugrad zugeordneten elektronischen Radeinheit mit einer Zustandserfassungseinrichtung zum Erfassen von Daten bezüglich des Betriebszustandes des Rads, einer Energieerfassungseinrichtung zum Erfassen von Daten bezüglich der der elektronischen Radeinheit augenblicklich durch einen Generator und durch eine Energiespeichereinrichtung zur Verfügung stehenden Energie, wobei die Funktionalität der Radeinheit in Abhängigkeit der zur Verfügung stehenden Energie gesteuert wird.

Der vorliegenden Erfindung liegt somit die Aufgabe zugrunde, ein Verfahren und eine Vorrichtung anzugeben, mittels denen auf einfache und kostengünstige Weise ausreichend Energie auch in bestimmten Fahrzuständen des Fahrzeugs der elektronischen Radeinheit zur Gewährleistung eines sicheren Betriebes in allen Fahrzuständen zur Verfügung gestellt wird.

Erfindungsgemäß wird diese Aufgabe verfahrensseitig durch das Verfahren mit den Merkmalen des Patentanspruchs 1 und vorrichtungsseitig durch die Vorrichtung mit den Merkmalen des Patentanspruchs 13 gelöst.

Die der vorliegenden Erfindung zugrunde liegende Idee besteht darin, dass mindestens eine Zustandserfassungseinrichtung zum Erfassen von Daten bezüglich des Betriebszustandes des Rads und/oder mindestens eine Energieerfassungseinrichtung zum Erfassen von Daten bezüglich der der Radelektronik momentan durch einen Generator und/oder einer Energiespeichereinrichtung zur Verfügung stehenden Energie vorgesehen sind. In Abhängigkeit der erfassten Daten der mindestens einen Zustandserfassungseinrichtung und/oder der mindestens einen Energieerfassungseinrichtung wird mittels einer mit der mindestens einen Zustandserfassungseinrichtung und/oder der mindestens einen Energieerfassungseinrichtung verbundenen zentralen Steuereinheit der Betrieb der Radelektronik und somit der dadurch festgelegte Energieverbrauch in geeigneter Weise gesteuert. Dadurch können bei weniger kritischen Betriebszuständen des Rads die elektronische Radeinheit in einem einen geringen Energieverbrauch aufweisenden Modus betrieben werden, wodurch sich der zwischengeschaltete Energiespeicher gegebenenfalls wieder regenerieren bzw. aufladen kann. Andererseits kann in einem kritischen Betriebszustand des Rads die elektronische Radeinheit zum Senden von Datensignalen mit beispielsweise einer gegenüber dem Normalbetrieb erhöhten Sendehäufigkeit, Wiederholrate, Wiederholfrequenz oder dergleichen in einem einen höheren Energieverbrauch aufweisenden Modus betrieben werden, wobei auf beispielsweise die vorab in der Energiespeichereinrichtung abgespeicherte Energie zurückgegriffen werden kann.

Somit weist die vorliegende Erfindung gegenüber den Ansätzen gemäß dem Stand der Technik den Vorteil auf, dass die zentrale Steuereinheit den augenblicklichen Betriebszustand des Rads und/oder die der elektronischen Radeinheit augenblicklich zur Verfügung stehende Energie erfasst und in Abhängigkeit dieser Gesamtsituation das Verhalten der elektronischen Radeinheit gezielt steuert, um während besonders wichtigen Betriebszuständen eine Funktion sicherzustellen, die zumindest kurzzeitig auch mehr Energie verbraucht, als von dem Generator zur Verfügung steht. Somit wird ein situationsabhängiges Verhalten der elektronischen Radeinheit gewährleistet, das den Nachteil der eingeschränkten Verfügbarkeit bekannter Generatoren einerseits und die Notwendigkeit einer Hilfsbatterie andererseits ausgleicht. Durch die so erhöhte Einsatzbereitschaft der elektronischen Radeinheit, beispielsweise in der Anfangsphase einer Fahrt, wird insbesondere eine sichere Lokalisierung und Initialisierung ermöglicht. Dabei ist unter Initialisierung insbesondere folgendes zu verstehen. Diese Funktion löst das Problem, dass das Fahrzeug die ihm zugeordneten Radelektroniken automatisch von fremden, zufällig ebenfalls empfangenen Radelektroniken unterscheiden können muss. Hintergrund ist die Möglichkeit, dass eine neue - zunächst unbekannte - Radelektronik vom Fahrer / Monteur installiert worden sein könnte. Das System soll automatisch in der Lage sein, eine solche neue Radelektronik anzulernen. Typische Lösungen analysieren die Häufigkeit, mit der die Identifier von Radelektroniken während einer festgelegten Zeit nach dem Losfahren vom Fahrzeugempfänger empfangen werden. Die zugehörige Funktionalität wird umso stabiler und konvergiert umso schneller, je häufiger Telegramme gerade während der ersten Minuten nach dem Losfahren übertragen werden.

Unter Lokalisierung ist dagegen insbesondere folgendes zu verstehen. Auch Positionsvertauschungen sollen automatisch detektiert werden. Dabei werden diverse Analysen z.B. der Veränderung der Beschleunigung bei Kurvenfahrt, der Empfangsfeldstärken absolut oder relativ zur Fahrsituation, der Drehrichtung der Räder, etc. durchgeführt. Wie bei der Initialisierung konvergieren die verschiedenen Verfahren im allgemeinen umso schneller, je häufiger die Radelektroniken nach dem Losfahren senden. Auch hier gewinnt das System durch die erhöhte Sendebereitschaft an Funktionalität.

Vorteilhafte Ausgestaltungen und Weiterbildungen der Erfindung sind Gegenstand der weiteren Unteransprüche sowie der Beschreibung unter Bezugnahme auf die Figuren der Zeichnung.

Gemäß einer bevorzugten Weiterbildung ist die elektronische Radeinheit direkt mit der Energiespeichereinrichtung für eine Energieversorgung verbunden, wobei die Energiespeichereinrichtung vorzugsweise zwischen dem Generator und der elektronischen Radeinheit vorgesehen ist. Vorteilhaft wird die Energiespeichereinrichtung mit einer Ladeelektronik für eine geeignete Umwandlung und Aufbereitung der von dem Generator empfangenen Signale ausgebildet. Beispielhaft wird die Energiespeichereinrichtung als wiederaufladbare Batterie, Kondensator, Goldcap-Kondensator, ein in eine Leiterplatte integrierter Folienakkumulator oder dergleichen ausgebildet. Selbstverständlich sind weitere Ausgestaltungen für eine Energiespeichereinrichtung möglich.

Gemäß einer weiteren bevorzugten Weiterbildung sind mehrere Zustandserfassungseinrichtungen zum Erfassen von beispielsweise Beschleunigungsdaten, Vibrationsdaten, Geräuschdaten, Kräften, Bewegungen, Temperaturdaten, Druckdaten, etc. des Rads vorgesehen. Die zentrale Steuereinheit ist mit sämtlichen Zustandserfassungseinrichtungen verbunden und kann einzelne der empfangenen Signale oder eine Kombination beliebiger Signale auswerten und aufbereiten. Die zentrale Steuereinheit bewertet beispielsweise die durch die einzelnen Signale erfasste Gesamtsituation für eine geeignete Ansteuerung. Weitere Betriebszustände können beispielsweise von auβen gezielt eingebrachte Zustandsänderungen sein. So können beispielsweise elektrische, magnetische oder elektromagnetische Signale sensiert werden, welche von einem fahrzeugfesten Sender abgegeben werden, um den Betriebszustand des Rades zu signalisieren.

Gemäß einem weiteren bevorzugten Ausführungsbeispiel sind mehrere Energieerfassungseinrichtungen zum Erfassen des momentanen Energieangebotes des Generators und des momentanen Auslastungszustands der Energiespeichereinrichtung vorgesehen. Vorteilhaft sind die Energieerfassungseinrichtungen als Sensoren ausgebildet, welche vollständig passiv betrieben werden, d.h. bei welchen eine Änderung der Zustandsgröße, die notwendige Betriebsenergie selbst generiert, um diese Änderung über den Sensor der zentralen Steuereinheit anzuzeigen. Beispiele für derartige Sensoren sind piezoelektrische Elemente für eine Detektion mechanischer Verformungen, Aufnehmerspulen für eine Detektion elektromagnetischer Signale mittels Induktion, pyroelektrische Elemente oder Thermopileeinrichtungen zur Detektion von Temperaturänderungen oder dergleichen.

Vorzugsweise wertet die zentrale Steuereinheit die von den Zustandserfassungseinrichtungen und/oder den Energieerfassungseinrichtungen empfangenen Daten bezüglich folgender Betriebszustände aus: des Fahrtbeginns, beispielsweise eine vorbestimmte Zeitspanne nach dem Fahrtantritt; der Initialisierung des Rads, wobei eine Inititalisierungsprozedur beispielsweise am Fahrzeugempfänger abläuft; der Lokalisierung des Rads, wobei eine Lokalisierungsprozedur am Fahrzeugempfänger abläuft; des Risikobereichs, beispielsweise bei unterschwelligem Druck und/oder überschwelliger Geschwindigkeit; des Gefahrbereichs, beispielsweise bei stark unterschwelligem Druck; des Ladebereichs, beispielsweise bei hohem Energieangebot am Generatorausgang und/oder geringem Füllstand der Energiespeichereinrichtung; des Entladebereichs, beispielsweise bei geringem Energieangebot am Generatorausgang und/oder bei hohem Füllstand der Energiespeichereinrichtung; oder dergleichen.

Gemäß einem weiteren bevorzugten Ausführungsbeispiel nimmt die zentrale Steuereinheit in Abhängigkeit der erfassten Daten folgende Steuerungen der elektronischen Radeinheit vor: der Sendehäufigkeit, der Messhäufigkeit, der Genauigkeit der Messungen, des Übergangs zu oder von einem Stromsparmodus der Radelektronik oder dergleichen; der Häufigkeit der Wiederholung eines Funktelegramms zur Verbesserung der Übertragungssicherheit; welche Messungen von der elektronischen Radeinheit vorgenommen werden; der Verbindung der elektronischen Radeinheit mit der Energiespeichereinrichtung; eine Adaption bzw. Auswahl der übertragenen Daten, beispielsweise wird zur Energieersparnis das Telegramm auf die nötigsten Kerndaten reduziert (nur Identifier und evt. zusätzlich Druck- und Temperaturdaten), während ohne Energiesparzwang die vollständigen Sensordaten samt Kalibrierungs- und Herstelldaten übertragen werden; oder dergleichen.

Insbesondere stellt die zentrale Steuereinheit während besonders wichtigen Betriebszuständen eine Funktion sicher, welche zumindest kurzzeitig mehr Energie verbraucht, als vom Generator und/oder der Energiespeichereinrichtung momentan zur Verfügung steht. Andererseits reduziert die zentrale Steuereinheit während weniger wichtigen Betriebszuständen vorteilhaft die Funktionalität unter das vom Energieangebot des Generators her verfügbaren Maß, um die Energiespeichereinrichtung als Ausgleich für zuvor übermäßig verbrauchte oder noch zu verbrauchende Energie aufzufüllen. Somit wird auch in wichtigen Fahrzuständen, beispielsweise zu Beginn des Fahrbetriebes eine zuverlässige Funktion der elektronischen Radeinheit gewährleistet.

Die Erfindung wird nachfolgend anhand der in den schematischen Figuren der Zeichnung angegebenen Ausführungsbeispiele näher erläutert. Es zeigen dabei:
- Figur 1: eine schematische Darstellung einer in einem Rad- fahrzeug integrierten Vorrichtung gemäß einem Aus- führungsbeispiel der vorliegenden Erfindung; und
- Figur 2: ein Blockdiagramm der erfindungsgemäßen Vorrich- tung gemäß einem bevorzugten Ausführungsbeispiel der vorliegenden Erfindung.

In den Figuren der Zeichnung sind gleiche bzw. funktionsgleiche Komponenten mit den selben Bezugszeichen versehen worden, soweit nichts Gegenteiliges angegeben ist.

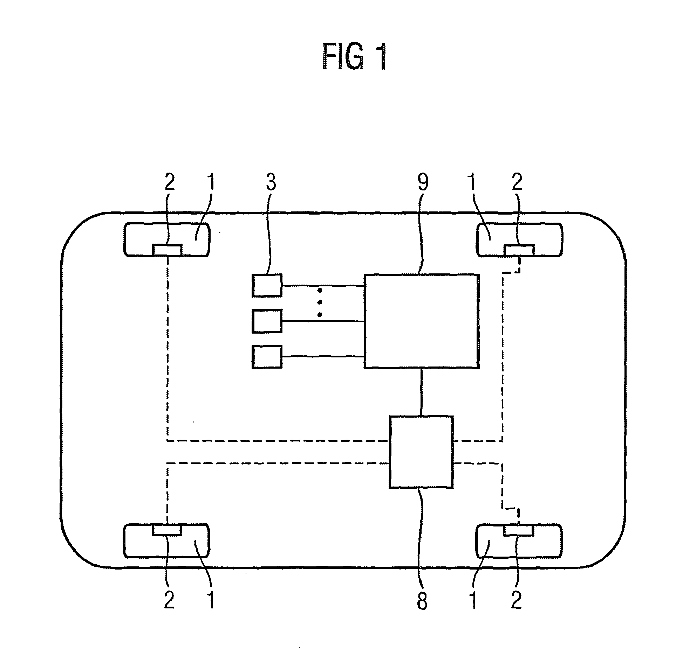

Figur 1 illustriert eine schematische Darstellung einer in einem Fahrzeug vorgesehenen Vorrichtung zur Steuerung des Betriebes einer einem Rad 1 zugeordneten elektronischen Radeinheit 2 gemäß einem bevorzugten Ausführungsbeispiel der vorliegenden Erfindung.

Wie in Figur 1 ersichtlich ist, weist vorzugsweise jedes Fahrzeugrad 1 jeweils eine zugeordnete elektronische Radeinheit 2 auf, welche beispielsweise im Reifen oder der Felgeninnenfläche bzw. dem Felgenrand montiert sind. Im folgenden wird die vorliegende Erfindung anhand eines Rads 1 mit zugeordneter elektronischer Radeinheit 2 näher erläutert, wobei die vorliegende Erfindung selbstverständlich auf sämtliche Räder analog anwendbar ist.

Eine Übertragung von gemessenen Radzustandsgrößen durch die elektronische Radeinheit 2 von derselben an eine zentrale Steuereinheit 9 erfolgt beispielsweise mittels einer Funkverbindung und eines zugeordneten Funkempfängers 8, welcher direkt mit der zentralen Steuereinheit 9 verbunden ist. Die zentrale Steuereinheit 9, wie ebenfalls in Figur 1 dargestellt ist, ist mit vorzugsweise mehreren Sensoren 3 verbunden, welche unterschiedliche Betriebszustände des Rads 1 sensieren.

Dabei können die Sensoren 3 entweder als separat in dem Kraftfahrzeug vorgesehene Sensoren oder als in der elektronischen Radeinheit 2 integrierte bzw. mit dieser direkt verbundene Sensoren ausgebildet sein. Vorteilhaft erfolgt eine gleichzeitige Nutzung der vorgesehenen Sensoren 3, beispielsweise zum Erfassen des Drucks, der Temperatur, der Beschleunigung oder dergleichen des Rads 1 durch die zentrale Steuereinheit 9 sowie durch die elektronische Radeinheit 2.

Die Sensoren 3 sensieren demnach Größen, welche Rückschlüsse auf den augenblicklichen Betriebszustand des Rads 1 zulassen. Derartige Messgrößen können beispielsweise Beschleunigungen, Vibrationen, Geräusche, Kräfte, Bewegungen, Temperaturen, Drücke oder andere Zustandsgrößen des Rads 1 sein.

Ferner können auch von außen gezielt eingebrachte Zustandsänderungen mittels den Sensoren 3 erfasst und die erfassten Daten an die zentrale Steuereinheit gesendet werden. Beispielsweise können elektrische, magnetische oder elektromagnetische Signale durch die Sensoren 3 erfasst werden, welche von einem fahrzeugfesten Sender abgegeben werden, um den augenblicklichen Betriebszustand des zugeordneten Rads 1 zu signalisieren.

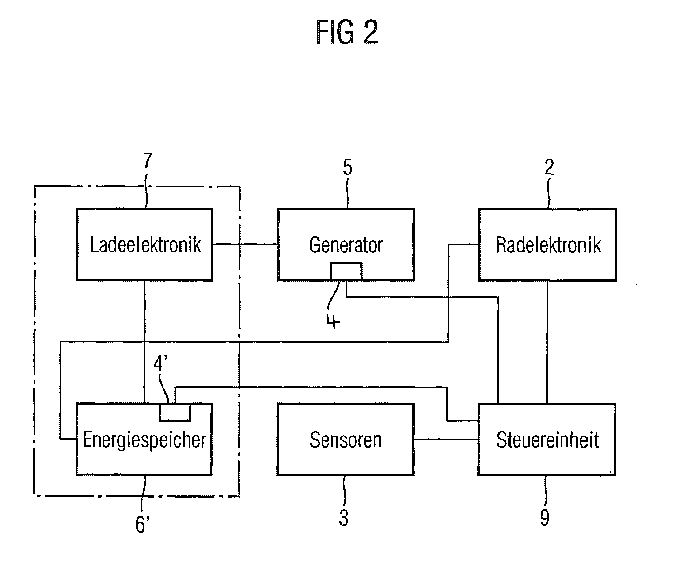

Ferner weist die Vorrichtung gemäß dem vorliegenden Ausführungsbeispiel eine oder mehrere Energieerfassungseinrichtungen 4, 4' auf, welche unter Bezugnahme auf Figur 2 näher erläutert werden. Die Energieerfassungseinrichtungen 4, 4' erfassen das momentane Energieangebot eines die Radeinheit e-nergieversorgenden Generators 5 und den momentanen Füllstand bzw. den momentanen Auslastungszustand eines vorzugsweise zwischen die elektronische Radeinheit 2 und den Generator 5 geschalteten Energiespeichers 6.

Der Generator 5 kann ein beliebig gestalteter Energiewandler sein, der z.B. mechanische Energie in elektrische Energie umwandelt. Ein Beispiel für einen derartigen Generator enthält die Patentschrift US 5 741 966.

Die Sensoren 3 bzw. die Energieerfassungseinrichtungen 4, 4' sind vorzugsweise als vollkommen passiv betreibbare Einrichtungen ausgebildet, so dass eine Änderung einer zu erfassenden Zustandsgröße selbst die Energie generiert, um diese Änderung der Zustandsgröße über den entsprechenden Sensor bzw. entsprechende Einrichtung an die zentrale Steuereinheit 9 zu übersenden. Beispielsweise können die Sensoren als piezoelektrische Elemente zur Detektion mechanischer Verformungen, als Aufnehmerspulen zur Detektion elektromagnetischer Signale mittels Induktion, oder dergleichen ausgebildet werden.

Figur 2 illustriert ein Blockschaltbild der einzelnen Komponenten einer erfindungsgemäßen Vorrichtung gemäß einem bevorzugten Ausführungsbeispiel der vorliegenden Erfindung. Wie in Figur 2 ersichtlich ist, ist die zentrale Steuereinheit 9, wie oben bereits erläutert, mit den Sensoren 3, einer Energieerfassungseinrichtung 4 des Generators 5 und einer Energieerfassungseinrichtung 4' des zwischengespeicherten Energiespeichers 6 verbunden. Somit erfasst die zentrale Steuereinheit 9 die augenblicklich zur Verfügung stehende Energie des Generators 5 und des zwischengeschalteten Energiespeichers 6 sowie den augenblicklichen Betriebszustand des Rades durch Auswertung der durch die einzelnen Einrichtungen 3, 4 und 4' empfangenen Daten.

Wie in Figur 2 ferner illustriert ist, ist die zentrale Steuereinheit 9, beispielsweise über eine Funkverbindung, mit der elektronischen Radeinheit 2 bzw. der Radelektronik 2 verbunden. Die Radelektronik 2 wiederum ist für eine Energiespeisung derselben über den Energiespeicher 6 mit dem Generator 5 verbunden. Der Energiespeicher 6 weist vorzugsweise eine Ladeelektronik 7 auf, welche die von dem energiegenerierenden Generator 5 empfangene Signale in geeigneter Weise umwandelt und für den Energiespeicher 6 für eine direkte Benutzung aufbereitet.

Die zentrale Steuereinheit 9 generiert aus einem oder mehreren Signalen eines oder mehrerer Sensoren 3 ein zugeordnetes Signal, welches den augenblicklichen Betriebszustand des Rads 1 charakterisiert. Dieses resultierende Signal kann beispielsweise einen oder mehrere der folgenden Betriebszustände des Rads 1 darstellen: den Fahrtbeginn, beispielsweise eine festgelegte Zeitspanne nach dem Fahrtantritt; eine Initialisierung, wobei eine Initialisierungsprozedur, vorzugsweise am Fahrzeugempfänger, abläuft; eine Lokalisierung, wobei eine Lokalisierungsprozedur, beispielsweise ebenfalls am Fahrzeugempfänger, abläuft; einen Risikobetriebszustand, beispielsweise bei einem erfassten unterschwelligen Druck und/oder einer überschwelligen Geschwindigkeit; einen Gefahrbetriebszustand, beispielsweise bei stark unterschwelligem Druck oder dergleichen. Ferner können die Daten der Energieerfassungseinrichtungen 4 und/oder 4' durch die zentrale Steuereinheit 9 separat oder in Verbindung mit den Signalen der Sensoren 3 ausgewertet werden. Somit kann beispielsweise auch ein resultierendes Signal durch die zentrale Steuereinheit 9 generiert werden, welches beispielsweise den Ladezustand des Energiesystems, bestehend aus dem Generator 5 und der Energiespeichereinrichtung 6, angibt. Beispielsweise kann durch die zentrale Steuereinheit 9 erfasst werden, dass sich das Energiesystem beispielsweise bei einem hohen Energieangebot am Generatorausgang und/oder einem geringen Füllstand des Energiespeichers 6 in einem Ladezustand befindet. Ferner kann die zentrale Steuereinheit 9 gegebenenfalls auch einen Entladezustand des Energiesystems durch ein entsprechend zugeordnetes Signal angeben, wenn beispielsweise ein geringes Energieangebot am Generatorausgang und/oder ein hoher Füllstand des Energiespeichers 6 vorliegt.

Die Steuereinheit 9 sendet das den Fahrzustand des Rads 1 und den Energiezustand des Energiesystems charakterisierende Signal an die elektronische Radeinheit 2 und steuert den Betrieb der elektronischen Radeinheit 2 derart, dass ein dem erfassten augenblicklichen Fahrzustand und dem augenblicklich vorherrschenden Energieangebot angepasster Modus von der elektronischen Radeinheit 2 durchlaufen wird.

Demnach wird der Betrieb bzw. der Modus der elektronischen Radeinheit 2 in Abhängigkeit der durch die zentrale Steuereinheit 9 erfassten Signale und somit der Energieverbrauch der Radelektronik 2 durch die zentrale Steuereinheit 9 in kostengünstiger und rad- und energiezustandsangepasster Weise gesteuert. Beispielsweise stellt die zentrale Steuereinheit 9 in Abhängigkeit der erfassten Signale, d.h. in Abhängigkeit des Fahrzustandes des Rads 1 und in Abhängigkeit des durch das Energiesystem zur Verfügung stehenden Energiereservoirs die Sendehäufigkeit der Radelektronik; die Messhäufigkeit der Radelektronik; die Häufigkeit einer Wiederholung eines Funktelegramms zur Verbesserung der Übertragungssicherheit; die Genauigkeit der Messungen der Radelektronik; die Auswahl, welche Messungen von der Radelektronik vorgenommen werden; einen Übergang zu oder vorn einem Stromsparmodus der Radelektronik, eine Verbindung der Radelektronik mit dem Energiespeicher oder dergleichen in geeigneter Weise ein.

Somit beeinflusst die zentrale Steuereinheit 9 das Verhalten der elektronischen Radeinheit 2 in Abhängigkeit der erfassten Signale, um beispielsweise während besonders wichtiger Betriebszustände eine Funktion sicherzustellen, die zumindest kurzzeitig mehr Energie verbraucht als von dem Generator 5 augenblicklich zur Verfügung steht. Während vergleichsweise weniger wichtigen Betriebszuständen wird gegebenenfalls die Funktionalität unter das von dem Energieangebot des Generators 5 her verfügbare Maß reduziert, um den Energiespeicher 6 als Ausgleich für zuvor übermäßig verbrauchte oder noch übermäßig zu verbrauchende Energie aufzuladen bzw. aufzufüllen. Somit wird auch während Betriebszuständen, in denen beispielsweise zu Beginn einer Fahrt nicht ausreichend Energie generiert und zur Verfügung gestellt werden kann, eine sichere und dem Fahrzustand angepasste Funktionalität der elektronischen Radeinheit 2 gewährleistet, ohne dass zusätzliche Hilfsbatterien verwendet werden müssen.

Die zentrale Steuereinheit 9 realisiert zusammen mit dem geeignet dimensionierten Energiespeicher 6 ein situationsabhängiges Verhalten der elektronischen Radeinheit 2, welches eine eingeschränkte Verfügbarkeit bekannter Generatoren beseitigt. Durch die derart erhöhte Einsatzbereitschaft der elektronischen Radeinheit 2, insbesondere in der Anfangsphase einer Fahrt, wird eine sichere Lokalisierung und/oder Initialisierung der zugeordneten Räder ermöglicht.

Die elektronische Radeinheit 2 kann direkt mit dem Generator 5 für eine Energieversorgung derselben verbunden werden, wobei lediglich bei bestimmten erfassten Betriebszuständen die Energiespeichereinrichtung 6 für eine Energieversorgung der elektronischen Radeinheit 2 hinzugeschaltet wird.

## Patentansprüche

1. Verfahren zur Steuerung des Betriebes einer einem Fahrzeugrad (1) zugeordneten elektronischen Radeinheit (2) mit folgenden Verfahrensschritten:
Erfassen von Daten bezüglich des Betriebszustandes des Rads (1) mittels mindestens einer Zustandserfassungseinrichtung (3) ;
Erfassen von Daten bezüglich der der elektronischen Radeinheit (2) augenblicklich durch einen Generator (5) und durch eine Energiespeichereinrichtung (6) zur Verfügung stehenden Energie mittels mindestens einer Energieerfassungseinrichtung (4, 4');
Steuern des Betriebes der elektronischen Radeinheit (2) und des dadurch festgelegten Energieverbrauchs der elektronischen Radeinheit (2) in Abhängigkeit der durch die mindestens eine Zustandserfassungseinrichtung (3) und die mindestens eine Energieerfassungseinrichtung (4, 4') erfassten Daten mittels einer mit der mindestens einen Zustandserfassungseinrichtung (3) und der mindestens einen Energieerfassungseinrichtung (4, 4') verbundenen zentralen Steuereinheit (9); und
Sicherstellen einer Funktionalität der elektronischen Radeinheit (2) während vorbestimmten wichtigen Betriebszuständen des Rads (1), welche zumindest kurzzeitig mehr Energie verbraucht, als von dem Generator (5) momentan zur Verfügung steht, und einer Funktionalität der elektronischen Radeinheit (2) während vorbestimmten weniger wichtigen Betriebszuständen des Rads (1), welche unter das von dem Energieangebot des Generators (5) her verfügbare Maß reduziert wird, um die Energiespeichereinrichtung (6) als Ausgleich für zuvor übermäßig verbrauchte oder noch zu verbrauchende Energie durch den Generator (5) aufzuladen.

2. Verfahren nach Anspruch 1,
**dadurch gekennzeichnet,**
**dass** die elektronische Radeinheit (2) direkt mit der Energiespeichereinrichtung (6) für eine Energieversorgung verbunden wird.

3. Verfahren nach Anspruch 1 oder 2,
**dadurch gekennzeichnet,**
**dass** die Energiespeichereinrichtung (6) zwischen dem Generator (5) und der elektronischen Radeinheit (2) vorgesehen wird.

4. Verfahren nach wenigstens einem der vorhergehenden Ansprüche,
**dadurch gekennzeichnet,**
**dass** die Energiespeichereinrichtung (6) mit einer Ladeelektronik (7) für eine geeignete Umwandlung und Aufbereitung der von dem Generator (5) empfangenen Signale ausgebildet wird.

5. Verfahren nach wenigstens einem der vorhergehenden Ansprüche,
**dadurch gekennzeichnet,**
die Energiespeichereinrichtung (6) als wiederaufladbare Batterie, Kondensator, Goldcap-Kondensator, ein in eine Leiterplatte integrierter Folienakkumulator, oder dergleichen ausgebildet wird.

6. Verfahren nach wenigstens einem der vorhergehenden Ansprüche,
**dadurch gekennzeichnet,**
**dass** mehrere Zustandserfassungseinrichtungen (3) zum Erfassen von Daten bezüglich Beschleunigungen, Vibrationen, Geräusche, Kräfte, Bewegungen, Temperaturen, Drücke, etc. des zugeordneten Rads (1) vorgesehen werden.

7. Verfahren nach wenigstens einem der vorhergehenden Ansprüche,
**dadurch gekennzeichnet,**
**dass** mehrere Energieerfassungseinrichtungen (4, 4') zum Erfassen des momentanen Energieangebotes des Generators (5) und des momentanen Auslastungszustands der Energiespeichereinrichtung (6) vorgesehen werden.

8. Verfahren nach wenigstens einem der vorhergehenden Ansprüche,
**dadurch gekennzeichnet,**
**dass** die zentrale Steuereinheit (9) von der mindestens einen Zustandserfassungseinrichtung (3) und/oder der mindestens einen Energieerfassungseinrichtung (4, 4') Daten bezüglich folgender Betriebszustände empfängt und auswertet: des Fahrtbeginns, beispielsweise einer festgelegten Zeitspanne nach einem Fahrantritt; einer Initialisierung, wobei eine Initialisierungsprozedur beispielsweise am Fahrzeugempfänger abläuft; einer Lokalisierung, wobei eine Lokalisierungsprozedur beispielsweise am Fahrzeugempfänger abläuft; eines Risikozustandes, beispielsweise bei einem unterschwelligen Druck und/oder einer überschwelligen Geschwindigkeit eines Rads (1); eines Gefahrzustandes, beispielsweise bei stark unterschwelligem Druck des Rads (1); des Ladezustands des Energiesystems, beispielsweise bei einem hohen Energieangebot am Ausgang des Generators (5) und/oder einem geringen Füllstand der Energiespeichereinrichtung (6), oder dergleichen.

9. Verfahren nach wenigstens einem der vorhergehenden Ansprüche,
**dadurch gekennzeichnet,**
**dass** die zentrale Steuereinheit (9) in Abhängigkeit der erfassten Daten folgende Steuerungen der elektronischen Radeinheit (2) vornimmt: der Sendehäufigkeit der elektronischen Radeinheit (2); der Messhäufigkeit der elektronischen Radeinheit (2); der Häufigkeit der Wiederholung eines Funktelegramms zur Verbesserung der Übertragungssicherheit; der Genauigkeit der Messungen der elektronischen Radeinheit (2); der Auswahl, welche Messungen von der elektronischen Radeinheit (2) vorgenommen werden; eines Übergangs zu oder von einem Stromsparmodus der elektronischen Radeinheit (2); eine Verbindung der elektronischen Radeinheit (2) mit der Energiespeichereinrichtung (6); eine Adaption bzw. Auswahl der übertragenen Daten, beispielsweise wird zur Energieersparnis das Telegramm auf die nötigsten Kerndaten reduziert (nur Identifier und evt. zusätzlich Druck- und Temperaturdaten), während ohne Energiesparzwang die vollständigen Sensordaten samt Kalibrierungs- und Herstelldaten übertragen werden; oder dergleichen.

10. Verfahren nach wenigstens einem der vorhergehenden Ansprüche,
**dadurch gekennzeichnet,**
**dass** die zentrale Steuereinheit (9) über eine Funkverbindung mit der elektronischen Radeinheit (2) verbunden wird.

11. Verfahren nach wenigstens einem der vorhergehenden Ansprüche,
**dadurch gekennzeichnet,**
**dass** die mehreren Zustandserfassungseinrichtungen (3) und/oder die mehreren Energieerfassungseinrichtungen (4, 4') als passiv betreibbare Sensoren ausgebildet werden.

12. Verfahren nach wenigstens einem der vorhergehenden Ansprüche,
**dadurch gekennzeichnet,**
**dass** der Generator (5) als Energiewandler ausgebildet wird.

13. Vorrichtung zur Steuerung des Betriebes einer einem Fahrzeugrad (1) zugeordneten elektronischen Radeinheit (2) mit:
mindestens einer Zustandserfassungseinrichtung (3) zum Erfassen von Daten bezüglich des Betriebszustandes des Rads (1);
mindestens einer Energieerfassungseinrichtung (4, 4') zum Erfassen von Daten bezüglich der der elektronischen Radeinheit (2) augenblicklich durch einen Generator (5) und durch eine Energiespeichereinrichtung (6) zur Verfügung stehenden Energie; und mit
einer mit der mindestens einen Zustandserfassungseinrichtung (3) und der mindestens einen Energieerfassungseinrichtung (4, 4') verbundenen zentralen Steuereinheit (9) zum Steuern des Betriebes der elektronischen Radeinheit (2) und des dadurch festgelegten Energieverbrauchs der elektronischen Radeinheit (2) in Abhängigkeit der erfassten Daten durch die mindestens eine Zustandserfassungseinrichtung (3) und die mindestens eine Energieerfassungseinrichtung (4, 4');
wobei die zentrale Steuereinheit (9) während vorbestimmten wichtigen Betriebszuständen des Rads (1) eine Funktionalität der elektronischen Radeinheit (2) sicherstellt, welche zumindest kurzzeitig mehr Energie verbraucht, als von dem Generator (5) momentan zur Verfügung steht, und während vorbestimmten weniger wichtigen Betriebszuständen des Rads (1) die Funktionalität unter das von dem Energieangebot des Generators (5) her verfügbare Maß reduziert, um die Energiespeichereinrichtung (6) als Ausgleich für zuvor übermäßig verbrauchte oder noch zu verbrauchende Energie durch den Generator (5) aufzuladen.

14. Vorrichtung nach Anspruch 13,
**dadurch gekennzeichnet,**
**dass** die elektronische Radeinheit (2) direkt mit der Energiespeichereinrichtung (6) für eine Energieversorgung verbunden ist.

15. Vorrichtung nach Anspruch 13 oder 14,
**dadurch gekennzeichnet,**
**dass** die Energiespeichereinrichtung (6) zwischen dem Generator (5) und der elektronischen Radeinheit (2) vorgesehen ist.

16. Vorrichtung nach wenigstens einem der Ansprüche 13 bis 15,
**dadurch gekennzeichnet,**
**dass** die Energiespeichereinrichtung (6) mit einer Ladeelektronik (7) für eine geeignete Umwandlung und Aufbereitung der von dem Generator (5) empfangenen Signale ausgebildet ist.

17. Vorrichtung nach wenigstens einem der Ansprüche 13 bis 16,
**dadurch gekennzeichnet,**
die Energiespeichereinrichtung (6) als wiederaufladbare Batterie, Kondensator, Goldcap-Kondensator, ein in eine Leiterplatte integrierter Folienakkumulator, oder dergleichen ausgebildet ist.

18. Vorrichtung nach wenigstens einem der Ansprüche 13 bis 17,
**dadurch gekennzeichnet,**
**dass** mehrere Zustandserfassungseinrichtungen (3) zum Erfassen von Daten bezüglich Beschleunigungen, Vibrationen, Geräusche, Kräfte, Bewegungen, Temperaturen, Drücke, etc. des zugeordneten Rads (1) vorgesehen sind.

19. Vorrichtung nach wenigstens einem der Ansprüche 13 bis 18,
**dadurch gekennzeichnet,**
**dass** mehrere Energieerfassungseinrichtungen (4, 4') zum Erfassen des momentanen Energieangebotes des Generators (5) und des momentanen Auslastungszustands der Energiespeichereinrichtung (6) vorgesehen sind.

20. Vorrichtung nach wenigstens einem der Ansprüche 13 bis 19,
**dadurch gekennzeichnet,**
**dass** die zentrale Steuereinheit (9) von der mindestens einen Zustandserfassungseinrichtung (3) und/oder der mindestens einen Energieerfassungseinrichtung (4, 4') Daten bezüglich folgender Betriebszustände empfängt und auswertet: des Fahrtbeginns, beispielsweise einer festgelegten Zeitspanne nach einem Fahrantritt; einer Initialisierung, wobei eine Initialisierungsprozedur beispielsweise am Fahrzeugempfänger abläuft; einer Lokalisierung, wobei eine Lokalisierungsprozedur beispielsweise am Fahrzeugempfänger abläuft; eines Risikozustandes, beispielsweise bei einem unterschwelligen Druck und/oder einer überschwelligen Geschwindigkeit eines Rads (1); eines Gefahrzustandes, beispielsweise bei stark unterschwelligem Druck des Rads (1); des Ladezustands des Energiesystems, beispielsweise bei einem hohen Energieangebot am Ausgang des Generators (5) und/oder einem geringen Füllstand der Energiespeichereinrichtung (6), oder dergleichen.

21. Vorrichtung nach wenigstens einem der Ansprüche 13 bis 20,
**dadurch gekennzeichnet,**
**dass** die zentrale Steuereinheit (9) in Abhängigkeit der erfassten Daten folgende Steuerungen der elektronischen Radeinheit (2) vornimmt: der Sendehäufigkeit der elektronischen Radeinheit (2); der Messhäufigkeit der elektronischen Radeinheit (2); der Häufigkeit der Wiederholung eines Funktelegramms zur Verbesserung der Übertragungssicherheit; der Genauigkeit der Messungen der elektronischen Radeinheit (2); der Auswahl, welche Messungen von der elektronischen Radeinheit (2) vorgenommen werden; eines Übergangs zu oder von einem Stromsparmodus der elektronischen Radeinheit (2); eine Verbindung der elektronischen Radeinheit (2) mit der Energiespeichereinrichtung (6); eine Adaption bzw. Auswahl der übertragenen Daten, beispielsweise wird zur Energieersparnis das Telegramm auf die nötigsten Kerndaten reduziert (nur Identifier und evt. zusätzlich Druck- und Temperaturdaten), während ohne Energiesparzwang die vollständigen Sensordaten samt Kalibrierungs- und Herstelldaten übertragen werden; oder dergleichen.

22. Vorrichtung nach wenigstens einem der Ansprüche 13 bis 21,
**dadurch gekennzeichnet,**
**dass** die zentrale Steuereinheit (9) über eine Funkverbindung mit der elektronischen Radeinheit (2) verbunden ist.

23. Vorrichtung nach wenigstens einem der Ansprüche 13 bis 22,
**dadurch gekennzeichnet,**
**dass** die mehreren Zustandserfassungseinrichtungen (3) und/oder die mehreren Energieerfassungseinrichtungen (4, 4') als passiv betreibbare Sensoren ausgebildet sind.

24. Vorrichtung nach wenigstens einem der Ansprüche 13 bis 23,
**dadurch gekennzeichnet,**
**dass** der Generator (5) als Energiewandler ausgebildet ist.

## Claims

1. Method for controlling the operation of an electronic wheel unit (2) which is assigned to a vehicle wheel (1), having the following method steps:
acquisition of data relating to the operating state of the wheel (1) by means of at least one state detection device (3);
acquisition of data relating to the energy instantaneously available to the electronic wheel unit (2) from a generator (5) and from an energy storage device (6), by means of at least one energy detection device (4, 4');
control of the operation of the electronic wheel unit (2) and of the energy consumption, defined thereby, of the electronic wheel unit (2) as a function of the data acquired by the at least one state detection device (3) and the at least one energy detection device (4, 4'), by means of a central control unit (9) which is connected to the at least one state detection device (3) and the at least one energy detection device (4, 4'); and
safeguarding of a functionality of the electronic wheel unit (2) during important predetermined operating states of the wheel (1), which functionality at least briefly consumes more energy than is instantaneously available from the generator (5), and a functionality of the electronic wheel unit (2) during less important predetermined operating states of the wheel (1), which functionality is reduced below the level available from the energy provided by the generator (5), in order to charge the energy storage device (6) as compensation for the excess amount of energy consumed previously, or the amount of energy still to be consumed, by the generator (5).

2. Method according to Claim 1, **characterized in that** the electronic wheel unit (2) is directly connected to the energy storage device (6) for a power supply.

3. Method according to Claim 1 or 2,
**characterized**
**in that** the energy storage device (6) is provided between the generator (5) and the electronic wheel unit (2).

4. Method according to at least one of the preceding claims,
**characterized**
**in that** the energy storage device (6) is embodied with a charge electronics (7) for suitable conversion and conditioning of the signals received from the generator (5).

5. Method according to at least one of the preceding claims,
**characterized**
**in that** the energy storage device (6) is embodied as a re-chargeable battery, capacitor, goldcap capacitor, a film accumulator integrated into a printed circuit board, or the like.

6. Method according to at least one of the preceding claims,
**characterized**
**in that** a plurality of state detection devices (3) for acquiring data relating to accelerations, vibrations, noises, forces, movements, temperatures, pressures etc. of the assigned wheel (1) are provided.

7. Method according to at least one of the preceding claims,
**characterized**
**in that** a plurality of energy detection devices (4, 4') are provided for acquiring the instantaneous amount energy provided by the generator (5) and the instantaneous load state of the energy storage device (6).

8. Method according to at least one of the preceding claims,
**characterized**
**in that** the central control unit (9) receives and evaluates data relating to the following operating states from the at least one state detection device (3) and/or the at least one energy detection device (4, 4'): the start of travel, for example a defined time period after travel begins; initialization, wherein an initialization procedure occurs, for example, at the vehicle receiver; a localization process, wherein a localization procedure occurs, for example, at the vehicle receiver; a risk state, for example in the case of a sub-threshold pressure and/or an above-threshold speed of a wheel (1); a hazardous state, for example in the case of a highly sub-threshold pressure of the wheel (1); of the charge state of the energy system, for example when a large amount of energy is provided at the output of the generator (5) and/or there is a low charge level of the energy storage device (6), or the like.

9. Method according to at least one of the preceding claims,
**characterized**
**in that** the central control unit (9) carries out the following control operations of the electronic wheel unit (2) as a function of the acquired data: the transmission frequency of the electronic wheel unit (2); the measuring frequency of the electronic wheel unit (2); the frequency of repetition of a radio telegram for improving the transmission security; the accuracy of the measurements of the electronic wheel unit (2);
the selection of which measurements are performed by the electronic wheel unit (2); a changeover to or from a power-saving mode of the electronic wheel unit (2); a connection of the electronic wheel unit (2) to the energy storage device (6); adaptation or selection of the transmitted data, for example in order to save energy the telegram is reduced to the most necessary central data (only identifier and possible additional pressure data and temperature data), while the complete sensor data together with calibration data and manufacturing data are transmitted when there is no compulsion to save energy; or the like.

10. Method according to at least one of the preceding claims,
**characterized**
**in that** the central control unit (9) is connected to the electronic wheel unit (2) via a radio link.

11. Method according to at least one of the preceding claims,
**characterized**
**in that** the plurality of state detection devices (3) and/or the plurality of energy detection devices (4, 4') are embodied as sensors which can be operated passively.

12. Method according to at least one of the preceding claims,
**characterized**
**in that** the generator (5) is embodied as an energy converter.

13. Device for controlling the operation of an electronic wheel unit (2) which is assigned to a vehicle wheel (1), having:
at least one state detection device (3) for acquiring data relating to the operating state of the wheel (1);
at least one energy detection device (4, 4') for acquiring data relating to the energy instantaneously available to the electronic wheel unit (2) from a generator (5) and from an energy storage device (6); and having
a central control unit (9) which is connected to the at least one state detection device (3) and the at least one energy detection device (4, 4'), for controlling the operation of the electronic wheel unit (2) and the energy consumption, defined thereby, of the electronic wheel unit (2) as a function of the data acquired by the at least one state detection device (3) and the at least one energy detection device (4, 4');
wherein the central control unit (9) safeguards, during important predetermined operating states of the wheel (1), a functionality of the electronic wheel unit (2), which functionality at least briefly consumes more energy than is instantaneously available from the generator (5), and during less important predetermined operating states of the wheel (1),
reduces the functionality below the level available from the energy provided by the generator (5), in order to charge the energy storage device (6) as compensation for the excess amount of energy consumed previously, or the amount of energy still to be consumed, by the generator (5).

14. Device according to Claim 13,
**characterized**
**in that** the electronic wheel unit (2) is directly connected to the energy storage device (6) for a power supply.

15. Device according to Claim 13 or 14,
**characterized**
**in that** the energy storage device (6) is provided between the generator (5) and the electronic wheel unit (2).

16. Device according to at least one of Claims 13 to 15,
**characterized**
**in that** the energy storage device (6) is embodied with a charge electronics (7) for suitable conversion and conditioning of the signals received from the generator (5).

17. Device according to at least one of Claims 13 to 16,
**characterized**
**in that** the energy storage device (6) is embodied as a re-chargeable battery, capacitor, goldcap capacitor, a film accumulator integrated into a printed circuit board, or the like.

18. Device according to at least one of Claims 13 to 17,
**characterized**
**in that** a plurality of state detection devices (3) for acquiring data relating to accelerations, vibrations, noises, forces, movements, temperatures, pressures etc. of the assigned wheel (1) are provided.

19. Device according to at least one of Claims 13 to 18,
**characterized**
**in that** a plurality of energy detection devices (4, 4') are provided for acquiring the instantaneous amount of energy provided by the generator (5) and the instantaneous load state of the energy storage device (6).

20. Device according to at least one of Claims 13 to 19,
**characterized**
**in that** the central control unit (9) receives and evaluates data relating to the following operating states from the at least one state detection device (3) and/or the at least one energy detection device (4, 4'): the start of travel, for example a defined time period after travel begins; initialization, wherein an initialization procedure occurs, for example, at the vehicle receiver; a localization process, wherein a localization procedure occurs, for example, at the vehicle receiver; a risk state, for example in the case of a sub-threshold pressure and/or an above-threshold speed of a wheel (1); a hazardous state, for example in the case of a highly sub-threshold pressure of the wheel (1); of the charge state of the energy system, for example when a large amount of energy is provided at the output of the generator (5) and/or there is a low charge level of the energy storage device (6), or the like.

21. Device according to at least one of Claims 13 to 20,
**characterized**
**in that** the central control unit (9) carries out the following control operations of the electronic wheel unit (2) as a function of the acquired data: the transmission frequency of the electronic wheel unit (2); the measuring frequency of the electronic wheel unit (2); the frequency of repetition of a radio telegram for improving the transmission security; the accuracy of the measurements of the electronic wheel unit (2); the selection of which measurements are performed by the electronic wheel unit (2); a changeover to or from a power-saving mode of the electronic wheel unit (2); a connection of the electronic wheel unit (2) to the energy storage device (6); adaptation or selection of the transmitted data, for example in order to save energy the telegram is reduced to the most necessary central data (only identifier and possible additional pressure data and temperature data), while the complete sensor data together with calibration data and manufacturing data are transmitted when there is no compulsion to save energy; or the like.

22. Device according to at least one of Claims 13 to 21,
**characterized**
**in that** the central control unit (9) is connected to the electronic wheel unit (2) via a radio link.

23. Device according to at least one of Claims 13 to 22,
**characterized**
**in that** the plurality of state detection devices (3) and/or the plurality of energy detection devices (4, 4') are embodied as sensors which can be operated passively.

24. Device according to at least one of Claims 13 to 23,
**characterized**
**in that** the generator (5) is embodied as an energy converter.

## Revendications

1. Procédé de commande du fonctionnement d'une unité de roue électronique (2) affectée à une roue de véhicule (1), comprenant les étapes de procédé consistant à :
saisir des données concernant l'état de fonctionnement de la roue (1) au moyen d'au moins un dispositif de saisie d'état (3) ;
saisir des données concernant l'énergie instantanée mise à la disposition de l'unité de roue électronique (2) par un générateur (5) et un dispositif de stockage d'énergie (6) au moyen d'au moins un dispositif de saisie d'énergie (4, 4') ;
commander le fonctionnement de l'unité de roue électronique (2) et la consommation d'énergie établie de la sorte de l'unité de roue électronique (2) en fonction des données saisies par le au moins un dispositif de saisie d'état (3) et le au moins un dispositif de saisie d'énergie (4, 4') au moyen d'une unité de commande centrale (9) connectée à moins un dispositif de saisie d'état (3) et à au moins un dispositif de saisie d'énergie (4, 4') ; et
assurer une fonctionnalité de l'unité de roue électronique (2) pendant des états de fonctionnement importants prédéterminés de la roue (1), qui consomme au moins brièvement plus d'énergie que celle mise à la disposition momentanément par le générateur (5), et une fonctionnalité de l'unité de roue électronique (2) pendant des états de fonctionnement moins importants prédéterminés de la roue (1), qui est réduite dans la mesure disponible par l'offre d'énergie du générateur (5) pour charger le dispositif de stockage d'énergie (6) afin de compenser l'énergie excessivement consommée auparavant ou l'énergie encore à consommer par le générateur (5).

2. Procédé selon la revendication 1,
**caractérisé en ce que**
l'unité de roue électronique (2) est connectée directement au dispositif de stockage d'énergie (6) pour une alimentation en énergie.

3. Procédé selon la revendication 1 ou 2,
**caractérisé en ce que**
le dispositif de stockage d'énergie (6) est prévu entre le générateur (5)etl'unitéderoueélectronique (2).

4. Procédé selon au moins l'une quelconque des revendications précédentes,
**caractérisé en ce que**
le dispositif de stockage d'énergie (6) se présente sous la forme d'un système électronique de chargement (7) destiné à une transformation et une préparation appropriées des signaux reçus par le générateur (5).

5. Procédé selon au moins l'une quelconque des revendications précédentes,
**caractérisé en ce que**
le dispositif de stockage d'énergie (6) se présente sous la forme d'une batterie rechargeable, d'un condensateur, d'un condensateur goldcap, d'un accumulateur en feuilles intégré à une carte de circuit imprimé ou similaire.

6. Procédé selon au moins l'une quelconque des revendications précédentes,
**caractérisé en ce que**
plusieurs dispositifs de saisie d'état (3) sont prévus pour saisir des données concernant des accélérations, des vibrations, des bruits, des forces, des mouvements, des températures, des pressions, etc. de la roue affectée (1).

7. Procédé selon au moins l'une quelconque des revendications précédentes,
**caractérisé en ce que**
plusieurs dispositifs de saisie d'énergie (4, 4') sont prévus pour saisir l'offre d'énergie momentanée du générateur (5) et l'état d'exploitation momentané du dispositif de stockage d'énergie (6).

8. Procédé selon au moins l'une quelconque des revendications précédentes,
**caractérisé en ce que**
l'unité de commande centrale (9) reçoit du au moins un dispositif de saisie d'état (3) et/ou du au moins un dispositif de saisie d'énergie (4, 4') et exploite des données concernant les états de fonctionnement suivants : des données sur le début de conduite, par exemple un intervalle de temps établi après un départ ; des données sur une initialisation, une procédure d'initialisation se déroulant par exemple sur le récepteur du véhicule ; des données sur une localisation, une procédure de localisation se déroulant par exemple sur le récepteur du véhicule ; des données sur un état de risque, par exemple dans le cas d'une pression de la roue (1) en dessous du seuil et/ou d'une vitesse de la roue (1) au-dessus du seuil (1) ; des données sur un état de danger, par exemple dans le cas d'une pression de la roue (1) fortement en dessous du seuil (1) ; des données sur l'état de charge du système d'énergie, par exemple dans le cas d'une offre d'énergie élevée à la sortie du générateur (5) et/ou d'un faible niveau du dispositif de stockage d'énergie (6), ou similaire.

9. Procédé selon au moins l'une quelconque des revendications précédentes,
**caractérisé en ce que**
l'unité de commande centrale (9) effectue, en fonction des données saisies, les commandes suivantes de l'unité de roue électronique (2) : la commande de la fréquence d'émission de l'unité de roue électronique (2) ; la commande de la fréquence de mesure de l'unité de roue électronique (2) ; la commande de la fréquence de répétition d'un radiogramme pour améliorer la sécurité de transmission ; la commande de la précision des mesures de l'unité de roue électronique (2) ; la commande du choix des mesures à effectuer par l'unité de roue électronique (2) ; la commande d'un passage vers ou depuis un mode d'économie de courant de l'unité de roue électronique (2) ; la commande d'une connexion de l'unité de roue électronique (2) avec le dispositif de stockage d'énergie (6) ; la commande d'une adaptation ou d'un choix des données transmises, par exemple pour économiser de l'énergie, le radiogramme est réduit aux données principales indispensables (seulement l'identifiant et éventuellement encore des données de pression et de température), tandis que, sans obligation d'économie d'énergie, les données de capteur complètes avec les données d'étalonnage et de fabrication sont transmises ; ou similaire.

10. Procédé selon au moins l'une quelconque des revendications précédentes,
**caractérisé en ce que**
l'unité de commande centrale (9) est connectée par un liaison radio à l'unité de roue électronique (2).

11. Procédé selon au moins l'une quelconque des revendications précédentes,
**caractérisé en ce que**
les multiples dispositifs de saisie d'état (3) et/ou les multiples dispositifs de saisie d'énergie (4, 4') se présentent sous la forme de capteurs à fonctionnement passif .

12. Procédé selon au moins l'une quelconque des revendications précédentes,
**caractérisé en ce que**
le générateur (5) se présente sous la forme d'un convertisseur d'énergie.

13. Dispositif de commande du fonctionnement d'une unité de roue électronique (2) affectée à une roue de véhicule (1), comprenant :
aumoinsundispositifdesaisied'état (3) pour saisir des données concernant l'état de fonctionnement de la roue (1) ;
au moins un dispositif de saisie d'énergie (4, 4') pour saisir des données concernant l'énergie instantanée mise à la disposition de l'unité de roue électronique (2) par un générateur (5) et par un dispositif de saisie d'énergie (6) ; et
une unité de commande centrale (9) connectée au au moins un dispositif de saisie d'état (3) et au au moins un dispositif de saisie d'énergie (4, 4') pour commander le fonctionnement de l'unité de roue électronique (2) et la consommation d'énergie établie de la sorte de l'unité de roue électronique (2) en fonction des données enregistrées par le au moins un dispositif de saisie d'état (3) et le au moins un dispositif de saisie d'énergie (4, 4') ;
dans lequel l'unité de commande centrale (9) assure, pendant des états de fonctionnement importants prédéterminés de la roue (1), une fonctionnalité de l'unité de roue électronique (2) qui consomme au moins brièvement plus d'énergie que celle mise à la disposition momentanément par le générateur (5) et, pendant des états de fonctionnement moins importants prédéterminés de la roue (1), réduit la fonctionnalité dans la mesure disponible par l'offre d'énergie du générateur (5) pour charger le dispositif de stockage d'énergie (6) afin de compenser l'énergie excessivement consommée auparavant ou l'énergie encore à consommer par le générateur (5).

14. Dispositif selon la revendication 13, **caractérisé en ce que**
l'unité de roue électronique (2) est connectée directement au dispositif de stockage d'énergie (6) pour une alimentation en énergie.

15. Dispositif selon la revendication 13 ou 14, **caractérisé en ce que**
le dispositif de stockage d'énergie (6) est prévu entre le générateur (5)etl'unitéderoueélectronique (2).

16. Dispositif selon au moins l'une quelconque des revendications 13 à 15,
**caractérisé en ce que**
le dispositif de stockage d'énergie (6) se présente sous la forme d'un système électronique de chargement (7) destiné à une transformation et une préparation appropriées des signaux reçus par le générateur (5).

17. Dispositif selon au moins l'une quelconque des revendications 13 à 16,
**caractérisé en ce que**
le dispositif de stockage d'énergie (6) se présente sous la forme d'une batterie rechargeable, d'un condensateur, d'un condensateur goldcap, d'un accumulateur en feuilles intégré à une carte de circuits imprimés, ou similaire.

18. Dispositif selon au moins l'une quelconque des revendications 13 à 17,
**caractérisé en ce que**
plusieurs dispositifs de saisie d'état (3) sont prévus pour saisir des données concernant des accélérations, des vibrations, des bruits, des forces, des mouvements, des températures, des pressions, etc. de la roue affectée (1).

19. Dispositif selon au moins l'une quelconque des revendications 13 à 18,
**caractérisé en ce que**
plusieurs dispositifs de saisie d'énergie (4, 4') sont prévus pour saisir l'offre d'énergie momentanée du générateur (5) et l'état d'exploitation momentané du dispositif de stockage d'énergie (6).

20. Dispositif selon au moins l'une quelconque des revendications 13 à 19,
**caractérisé en ce que**
l'unité de commande centrale (9) reçoit du au moins un dispositif de saisie d'état (3) et/ou du au moins un dispositif de saisie d'énergie (4, 4') et exploite des données concernant les états de fonctionnement suivants : des données sur le début de conduite, par exemple un intervalle de temps établi après un départ ; des données sur une initialisation, une procédure d'initialisation se déroulant par exemple sur le récepteur du véhicule ; des données sur une localisation, une procédure de localisation se déroulant par exemple sur le récepteur du véhicule ; des données sur un état de risque, par exemple dans le cas d'une pression de la roue (1) en dessous du seuil et/ou d'une vitesse de la roue (1) au-dessus du seuil (1) ; des données sur un état de danger, par exemple dans le cas d'une pression de la roue (1) fortement en dessous du seuil (1) ; des données sur l'état de charge du système d'énergie, par exemple dans le cas d'une offre d'énergie élevée à la sortie du générateur (5) et/ou d'un faible niveau du dispositif de stockage d'énergie (6), ou similaire.

21. Dispositif selon au moins l'une quelconque des revendications 13 à 20,
**caractérisé en ce que**
l'unité de commande centrale (9) effectue, en fonction des données saisies, les commandes suivantes de l'unité de roue électronique (2) : la commande de la fréquence d'émission de l'unité de roue électronique (2) ; la commande de la fréquence de mesure de l'unité de roue électronique (2) ;la commande de la fréquence de répétition d'un radiogramme pour améliorer la sécurité de transmission ; la commande de la précision des mesures de l'unité de roue électronique (2) ; la commande du choix des mesures à effectuer par l'unité de roue électronique (2) ; la commande d'un passage vers ou depuis un mode d'économie de courant de l'unité de roue électronique (2) ; la commande d'une connexion de l'unité de roue électronique (2) avec le dispositif de stockage d'énergie (6) ; la commande d'une adaptation ou d'un choix des données transmises, par exemple pour économiser de l'énergie, le radiogramme est réduit aux données principales indispensables (seulement l'identifiant et éventuellement encore des données de pression et de température), tandis que, sans obligation d'économie d'énergie, les données de capteurs complètes avec les données d'talonnage et de fabrication sont transmises ; ou similaire.

22. Dispositif selon au moins l'une quelconque des revendications 13 à 21,
**caractérisé en ce que**
l'unité de commande centrale (9) est connectée via une liaison radio à l'unité de roue électronique (2).

23. Dispositif selon au moins l'une quelconque des revendications 13 à 22,
**caractérisé en ce que**
les multiples dispositifs de saisie d'état (3) et/ou les multiples dispositifs de saisie d'énergie (4, 4') se présentent sous la forme de capteurs à fonctionnement passif.

24. Dispositif selon au moins l'une quelconque des revendications 13 à 23,
**caractérisé en ce que**
le générateur (5) se présente sous la forme d'un convertisseur d'énergie.
